# EUROPÄISCHE PATENTANMELDUNG

(11) **EP 0 994 086 A1**
(43) Veröffentlichungstag der Anmeldung: **19.04.2000**
(21) Anmeldenummer: 99120108.8
(22) Anmeldetag: 08.10.1999
(51) Int. Cl.: C04B 38/00

(54) **Poröses, insbesondere offenporiges Trägermaterial auf Silikatbasis und Verfahren zu dessen Herstellung**

(30) Priorität: 12.10.1998 AT 169898
(71) Anmelder: Wustinger, Horst, 5204 Strasswalchen (AT)
(72) Erfinder: Wustinger, Horst, 5204 Strasswalchen (AT)
(74) Vertreter: Secklehner, Günter, Dr.

(57) **Zusammenfassung**

Die Erfindung betrifft ein poröses, insbesondere offenporiges, vorzugsweise teilchenförmiges und/oder inertes, Trägermaterial (1) auf Silikatbasis für feste und/oder flüssige und/oder gasförmige Substanzen (2), zumindest bestehend aus zumindest einem Kieselsäure bzw. deren Anhydrit enthaltenden Material, z.B. Quarz, quarzhältige Sande, Schiefer oder dgl., und zumindest einem kalk- bzw. calciumoxidhältigen Material bzw. Bindemittel, insbesondere einem hydraulischem, z.B. Kalk, Zemente wie z.B. Portlandzement, Traßzement, Hochofenzement, oder dgl., und/oder zumindest einem Reaktionsprodukt aus den vorgenannten Materialien, z.B. ein Calziumsilikathydrat oder dgl. Die Trägermaterialoberfläche (10) ist bezogen auf ein definiertes Trägermaterialvolumen durch die Ausbildung von Poren und/oder Kapillaren (3, 4) im Mikro- und/oder Makromaßstab vergrößert. Zumindest 50 % der Poren (3) und/oder Kapillaren (4) sind Mikroporen (6) und weisen einen mittleren Durchmesser von maximal 100 mm, vorzugsweise maximal 30 mm, auf.

## Beschreibung

Die Erfindung betrifft ein poröses, insbesondere offenporiges, vorzugsweise teilchenförmiges und/oder inertes Trägermaterial auf Silikatbasis, ein damit hergestelltes, mit zumindest einem hydraulischen Bindemittel gebundenes, Feststoffgemisch, sowie ein Verfahren zum Herstellen des Trägermaterials gemäß den Oberbegriffen der Ansprüche 1, 8 und 13.

Derartige Trägermaterialien sind schon seit längerer Zeit bekannt und werden beispielsweise für diverse Sanierputze oder dgl. verwendet. Sanierputze, Putze für nasse und salzgeschädigte Wände, werden üblicherweise so rezeptiert, daß sie eine möglichst große Anzahl von Luftporen in sich haben und hydrophobiert sind, sodaß das Wasser im Putz durch Hydrophobierung zum Verdampfen gezwungen wird und die Salze, die kristallisieren, sich schadlos in die vorhandenen Luftporen hineinbilden können. Die Lebensdauer eines Sanierputzes hängt aber nicht nur von der Anzahl seiner Luftporen ab - je mehr Luftporen, desto länger ist die Lebensdauer - sie hängt auch von der Größe dieser Luftporen ab. Ein Wassertransport kann in Kapillaren und Poren nur stattfinden, wenn diese einen mittleren Durchmesser von maximal 100 µm aufweisen. Somit kann aber auch die Salzkristallisation in Sanierputzen nur in derartig ausgebildeten Kapillaren und Poren stattfinden, da den Salztransport üblicherweise Wasser als Trägermedium für die gelösten Salze übernimmt.

Eine Bildung von Luftporen durch Tenside ist demnach bei Sanierputzen nicht ratsam, weil diese Tensidluftporen wesentlich größer als 100 µm sind, und es in diesen Luftporen demzufolge zu keinem Wassertransport und auch zu keiner Salzablagerung kommen kann.

Da wie zuvor beschrieben die Anzahl der Luftporen für die Lebensdauer des Sanierputzes verantwortlich ist, ist also eine Herstellung von Sanierputzen nach dem Stand der Technik aus Sanden und geeigneten Bindemitteln unter Beigabe von Leichtstoffen, wie z.B. Perlit, Bims oder dgl., nicht zielführend. Der Grund dafür ist zum einen, daß alle Räume, die dieser Sand einnimmt, für den Sanierputz als Transport- und Lagerstätte für Salze völlig verloren gehen und zum anderen in den Hohlräumen des Bimses oder der Perlite aufgrund der Größe dieser Hohlräume ein Wassertransport und somit eine Salzablagerung nur in unzureichendem Maßstab stattfinden kann.

Ein zu den natürlichen, oben genannten Füllstoffen recht ähnlicher Füllstoff ist aus der DE 32 13 521 C2 bekannt. Darin wird ein Verfahren zur Herstellung eines porösen, durch Zerkleinern gewonnenen Granulates aus einer Ausgangsmischung, bestehend aus mindestens einem kalkhaltigen Bindemittel (z.B. Kalk, Zement), mindestens einem kieselsäurehältigen Material (z.B. Quarzsand, Schieferasche, Flugasche), sowie Wasser und einem gas- oder schaumbildenden Mittel und gegebenenfalls Hydrophobierungsmitteln beschrieben, wobei diese Ausgangsmischung in Formen gegossen wird und durch die Reaktion der Edukte Makroporen gebildet werden. Nach dem Abbinden und Entformen der Masse wird letztere zu Granulaten zerkleinert, und diese in einem Behälter gesammelt und hydrothermal gehärtet. Verwendet werden kann dieses Granulat beispielsweise zum Aufsaugen von Flüssigkeiten wie Öl. Da Öle üblicherweise eine im Vergleich zu Wasser höher Viskosität aufweisen, erscheint die Ausbildung von Makroporen als vorteilhaft. Zum Wassertransport in Sanierputzen sind jedoch diese Makroporen wie oben ausgeführt nicht geeignet. Als weiterer Verwendungszweck für dieses Granulat wird dessen Einsatz als Füllmittel in Verputzmassen vorgeschlagen. Dazu soll aber über einen weiteren Verfahrensschritt die Außenhaut der Granulate durch Rollen verdichtet werden, sodaß letztere eine äußere, nicht poröse Oberfläche aufweisen und somit die Granulate für einen Salztransport nicht mehr zur Verfügung stehen.

Der Erfindung liegt also die Aufgabe zugrunde, ein Trägermaterial zu schaffen, das durch seine Form, insbesondere durch seine innere Struktur und seine Oberflächenbeschaffenheit, dazu geeignet ist, die Lebensdauer von damit hergestellten, mit hydraulischen Bindemitteln gebundenen Feststoffgemischen zu verlängern.

Diese Aufgabe der Erfindung wird durch die Merkmale im Kennzeichenteil des Anspruches 1 gelöst. Vorteilhaft ist dabei einerseits, daß es nunmehr möglich ist, einen großen Volumsanteil des Trägermaterials für den Transport salzhältiger Lösungen und in Folge für die Ausscheidung von Salzen in diesem Trägermaterial zur Verfügung zu stellen, und andererseits ein Trägermaterial zur Verfügung zu haben, durch welches nicht nur feste und/oder flüssige Substanzen in mit dem Trägermaterial hergestellte Feststoffgemische eingetragen werden können, sondern vielmehr auch die Möglichkeit besteht, in diese Feststoffgemische auf einfache Art und Weise gasförmige Substanzen, wie z.B. Luft, durch die Verdrängung der Luft aus den Poren des Trägermaterials durch die z.B. aufgrund der Kapillarwirkung in das Innere des Trägermaterials eindringenden Salzlösungen einzubringen, wobei zudem nach dem Verdampfen des Lösungsmittels in den Poren und Kapillaren wiederum erneut Luftporen zur Verfügung stehen. Damit trägt das erfindungsgemäße Trägermaterial nicht nur zur Erhöhung der Lebensdauer des Feststoffgemisches, z.B. eines Sanierputzes, bei, sondern kann damit auch der Wärmedurchgangswiderstand eines das Trägermaterial enthaltende Feststoffgemisch erhöht werden, d.h. daß durch ein derartiges Trägermaterial die Wärmedämmung erhöht werden kann. Damit kann aber auch die Temperaturverringerung aufgrund der benötigten Wärme zur Verdampfung des Wassers, welchen den Gesetzen der Physik entsprechend der Umgebung entnommen wird und somit diese abkühlt, zumindest ausgeglichen werden. In der Folge kann durch den Einsatz dieses Trägermaterials in Sanierputzen verhindert werden, daß die Oberfläche so weit abkühlt, daß die Temperatur unterhalb des Taupunktes sinkt, und es in der Folge zur Kondensation des zuvor aus dem Sanierputz ausgedampften Wassers kommen kann, was wiederum zum Verschluß der Oberflächen mit Wasser führen kann. Es kann somit vorteilhafter Weise verhindert werden, daß der Sanierputz in seiner Funktion behindert bzw. zerstört wird.

Von Vorteil ist dabei auch eine Ausgestaltung nach Anspruch 2, da es damit möglich wird, das Trägermaterial individuell an spezielle Einsatzfälle anzupassen, sodaß in der Folge auch die Kosten für dieses Trägermaterial gesteuert und für den jeweiligen Einsatzzweck angepaßt werden können.

Von Vorteil ist aber auch eine Ausgestaltung nach den Ansprüchen 3 oder 4, die es ermöglichen, das erfindungsgemäße Trägermaterial in dünn aufzutragenden Feststoffgemischen, z.B. Mörtel, zu verwenden, und dabei gleichzeitig eine zumindest annähernd glatte Oberfläche des Feststoffgemisches zu erreichen.

Vorteilhaft ist aber auch eine Weiterbildung nach den Ansprüchen 5 und 6, wonach es durch die zumindest Teilhydrophobierung der Trägermaterialoberfläche möglich ist, ein Trägermaterial zu Verfügung zu stellen, welches Kapillaren und Poren aufweist, die beim Versetzen eines Feststoffgemisches mit diesem Trägermaterial nicht bereits vor Austrocknung des Feststoffgemisches mit Salzen durchwandert ist, sodaß diese Salze die Hydrophobierung aufgrund ihrer hydroskopischen Eigenschaften umgehen können.

Von Vorteil ist aber auch eine Weiterbildung nach Anspruch 7, da es durch die zumindest teilweise Beschichtung der Trägermaterialoberfläche mit Wirkkomponenten nunmehr möglich ist, die aus den Kapillaren und Poren verdrängten Luftbläschen gegen eine Kollabierung zu stabilisieren, sodaß in der Folge wiederum ein mit dem Trägermaterial versehenes Feststoffgemisch eine große Anzahl von Luftporen enthalten kann.

Die Erfindung wird aber auch durch die Merkmale im Kennzeichenteil des Anspruches 8 gelöst. Von Vorteil ist dabei, daß nunmehr auf einfache Art und Weise Feststoffgemische, beispielsweise Putz, Mörtel, Beton oder dgl., hergestellt werden können, wobei mit dem erfindungsgemäßen Trägermaterial erforderliche feste und/oder flüssige und/oder gasförmige Substanzen in das Feststoffgemisch zumindest teilweise eingebracht werden können, sodaß sich die Rezeptierung dieser Feststoffgemische erheblich erleichtern läßt. Zudem ist es damit möglich, auf umweitschonende Art stark staubende feste Wirkkomponenten in Feststoffgemische einzubringen, da diese Wirkkomponenten bereits bei der Herstellung des Trägermaterials mitverarbeitet werden können.

Von Vorteil ist aber auch eine Ausbildung nach den Ansprüchen 9 und/oder 10, da es durch das Mischen von hydrophobierten und nicht hydrophobierten Trägermaterial im Feststoffgemisch möglich ist, einerseits bereits beim Austrocknen des Feststoffgemisches, beispielsweise des Putzes, also kurz nach dem Aufbringen, durch die Hydrophobierung Verdampfungszonen zur Verfügung zu haben, in die Wasser eindampfen und damit Salzkristalle eingelagert werden können, und daß andererseits durch die nicht hydrophobierten Anteile im Feststoffgemisch die zuvor labormäßig genau bestimmten Mengen und Größen an Luftporen und/oder Kapillaren im Feststoffgemisch gebildet werden können.

Von Vorteil ist dabei auch eine Ausgestaltung nach Anspruch 11, da es damit möglich wird, die aus den Poren und Kapillaren des Füllstoffes verdrängte Luft zu stabilisieren und im Feststoffgemisch somit eine große Anzahl an Luftporen, beispielsweise zur Wärmedämmung, zur Verfügung zu haben.

Durch die Weiterbildung nach Anspruch 12 ist es möglich, die Verarbeitbarkeit des Feststoffgemisches aufgrund einer längeren Offenzeit, beispielsweise durch Abbindeverzögerer für das hydraulische Bindemittel, zu verlängern.

Die Erfindung wird aber auch durch die Merkmale im Kennzeichenteil des Anspruches 13 gelöst. Durch die gezielte Einstellung der mittleren Teilchengröße des gas- und/oder schaumbildenden Materials wird es nunmehr auf einfache Weise möglich, im Trägermaterial Kapillaren und/oder Poren zu erzeugen, die für einen Wassertransport geeignet sind.

Vorteilhaft ist dabei auch eine Weiterbildung nach Anspruch 14, da es durch die Verwendung des Aluminiums möglich ist, ein Gas zu erzeugen, insbesondere Wasserstoff, wobei das entsprechende, benötigte, wäßrige, alkalische Milieu durch die Trägermaterialrezeptur zur Verfügung gestellt werden kann, sodaß keine weiteren Komponenten nötig sind.

Vorteilhaft ist aber auch eine Weiterbildung des erfindungsgemäßen Verfahrens gemäß Anspruch 15, da damit der Energieeinsatz für die Zerkleinerung des durch den Bläh- und Trockenvorgang erzeugten Trägermaterials verringert werden kann.

Vorteilhaft ist aber auch eine Ausgestaltung nach Anspruch 16, da die Trocknung des Reaktionsgemisches, also des Trägermaterials, damit einerseits durch eine Komponente des Reaktionsgemisches, beispielsweise Branntkalk, und andererseits thermisch erfolgen kann, sodaß wiederum der Energieeinsatz verringert werden kann.

Durch die Einstellung entsprechender Sieblinien gemäß Anspruch 17 kann auf vorteilhafte Weise ein einheitliches Produkt zur Verfügung gestellt werden, sodaß es damit möglich wird, Feststoffgemische herzustellen, die nach deren Verarbeitung eine zumindest annähernd ebenflächige Oberflächenstruktur aufweisen können.

Schließlich sind aber auch Ausgestaltungen des Verfahrens nach den Ansprüchen 18 und/oder 19 von Vorteil, da damit die bei der weiteren Verarbeitung des Trägermaterials benötigten Chemikalien bereits während der Herstellung des Trägermaterials mit berücksichtigt werden können, sodaß sich eine folgende Rezeptierung eines Feststoffgemisches erheblich erleichtern läßt und es zudem damit auch möglich ist, auf individuelle Kundenwünsche individuell zu reagieren.

Zum besseren Verständnis wird die Erfindung anhand der nachfolgenden Figuren näher erläutert.

Es zeigen:
- Fig. 1: die Darstellung eines stark vergrößerten und stark vereinfachten erfindungsgemäßen Trägermaterialteilchens mit entsprechenden Poren und Kapillaren;
- Fig. 2: das erfindungsgemäße Trägermaterial, gebunden in einem Feststoffgemisch in stark vereinfachter Darstellung;
- Fig. 3: ein Schaubild für einen möglichen Verfahrensablauf zur Herstellung des erfindungsgemäßen Trägermaterials in vereinfachter Darstellung.

Einführend sei festgehalten, daß in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

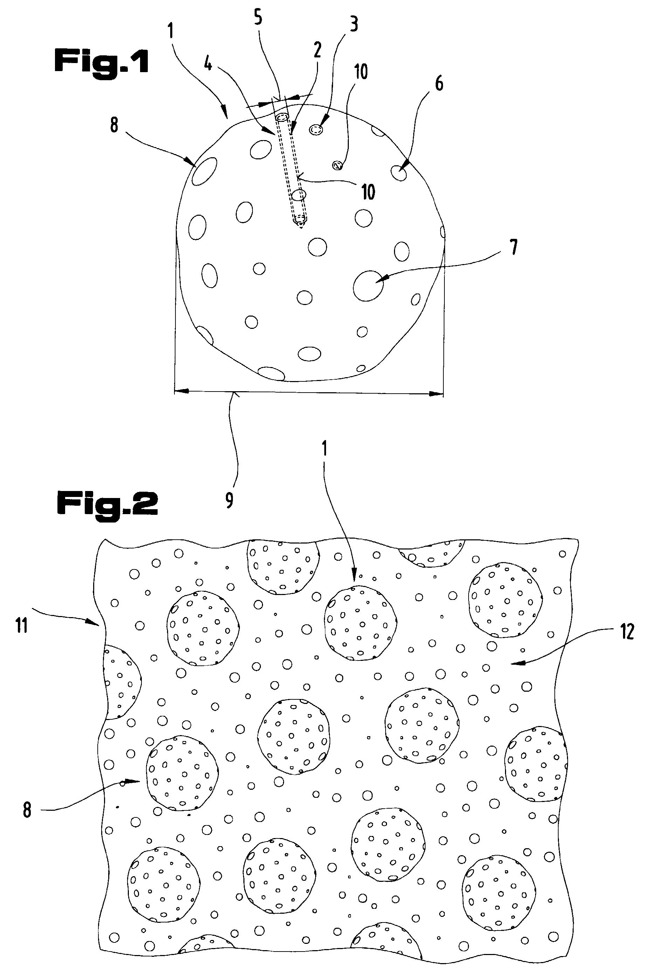

Fig. 1 zeigt ein erfindungsgemäßes Trägermaterial 1 in stark vereinfachter Darstellung. Dieses Trägermaterial 1 weist vorzugsweise eine poröse, insbesondere offenporige, Struktur auf und ist geeignet für die Beladung bzw. den Transport von festen und/oder flüssigen und/oder gasförmigen Substanzen 2. Derartige Substanzen 2 können beispielsweise Hydrophobierungsmittel, Tenside, sprühgetrocknete Luftporenbildner, Fließharze, Verarbeitungshilfen für Putze, Mörtel, Stabilisatoren für Schäume oder dgl., sein.

Das Trägermaterial 1 weist sowohl im Inneren als auch über die Oberfläche verteilt Poren 3 und/oder Kapillaren 4 auf. Diese Poren 3 bzw. Kapillaren 4 können einen mittleren Durchmesser 5 von maximal 100 µm, vorzugsweise maximal 30 µm, aufweisen.

Das Trägermaterial 1 kann aber auch zusätzlich zu diesen Mikroporen 6 Poren und/oder Kapillaren 3, 4 im Makromaßstab enthalten, wobei diese Makroporen 7 eine mittlere Porengröße von maximal 1,5 mm, vorzugsweise im Bereich zwischen 0,5 mm und 1,2 mm, aufweisen.

Um die im folgenden noch näher zu beschreibenden Eigenschaften des Trägermaterials zu erreichen, sollte der Anteil der Poren und/oder Kapillaren 3, 4 im Makromaßstab nicht größer sein als der Anteil der Mikroporen 6 im Trägermaterial 1. Vorzugsweise sind zwischen 80 % und 100 % der Poren und/oder Kapillaren 3, 4 im Mikromaßstab ausgebildet.

Wie Fig. 1 zeigt, kann das Trägermaterial 1 als Teilchen 8 ausgeführt sein, wobei ein maximaler durchschnittlicher Teilchendurchmesser 9 im Bereich zwischen 0,1 mm und 10 mm, vorzugsweise zwischen 0,1 mm und 1,2 mm, liegen kann. Die Teilchen 8 können zumindest annähernd kugelförmig, linsenförmig, aber auch unregelmäßig oder dgl. ausgebildet sein. Selbstverständlich sind andere Formen für die Teilchen 8 möglich, und richten sich diese Formen vielmehr nach der Art der Herstellung, insbesondere wie noch beschrieben wird nach der Art der Brechung des Reaktionsproduktes aus den Edukten für das Trägermaterial 1.

Wie bereits erwähnt, kann zumindest ein Teil einer Trägermaterialoberfläche 10 der Poren 3 und/oder Kapillaren 4 mit zumindest einer Substanz 2 beschichtet sein. So ist es mit Hilfe dieser Substanzen 2 bspw. möglich, die Trägermaterialoberfläche 10 zumindest teilweise zu hydrophobieren, wobei für die Hydrophobierung bspw. Verbindungen der Oleinsäure, z.B. Oleate, eine Verbindung der Stearinsäure, z.B. ein Stearat, ein Silikonpolymeres, Silikonate, ein Oxa-Silacycloalkan, Mischungen daraus oder dgl., aufgebracht werden können. Das erfindungsgemäße Trägermaterial 1 kann beispielsweise als Füllstoff für Putze, Mörtel, Beton oder dgl. eingesetzt werden.

Fig. 2 zeigt dazu ein Beispiel eines Feststoffgemisches 11, in welchem das teilchenförmige Trägermaterial 1 mit Hilfe eines hydraulischen Bindemittels 12 zu einem mehr oder weniger festen Verbund gebunden sein kann, wobei Fig. 2 einen stark vereinfachten Ausschnitt aus einem Sanierputz darstellt.

In diesem Feststoffgemisch 11 können hydrophobierte und nicht-hydrophobierte Teilchen 8 des Trägermaterials 1 vorliegen, wobei der Anteil des hydrophobierten Trägermaterials 1 am Trägermaterialgemisch im Bereich zwischen 40 Gew.-% und 80 Gew.-%, vorzugsweise zwischen 50 Gew.-% und 70 Gew.-%, bezogen auf 100 Gew.-% Trägermaterialgemisch, liegen kann.

Wiederum kann das Trägermaterial 1, bzw. dessen Teilchen 8, zumindest teilweise mit zumindest einem weiteren Feststoff und/oder einer Flüssigphase beladen sein, z.B. einem Fließharz, einem Luftporenbildner beispielsweise einem Tensid, einem Stabilisator für Schäume oder dgl. Ebenso kann das Trägermaterial 1 als Träger für Verarbeitungshilfen, z.B. zur Erzielung einer entsprechenden Offenzeit des hydraulischen Bindemittels 12, fungieren.

Wie bereits erwähnt kann das Trägermaterial 1 als Füllstoff für Putze oder dgl. verwendet werden.

Sanierputze, Putze für nasse und salzgeschädigte Wände werden üblicherweise so rezeptiert, daß sie eine möglichst große Anzahl von Luftporen in sich haben und hydrophobiert sind, sodaß das Wasser im Putz durch die Hydrophobierung zum Verdampfen gezwungen wird und die dabei auskristallisierenden Salze sich schadlos in die vorhandenen Luftporen hineinbilden können. Die Lebensdauer eines Sanierputzes hängt aber nicht nur von der Anzahl der Luftporen ab - je mehr Luftporen, desto größer ist die erwartete Lebensdauer des Sanierputzes - sondern sie hängt auch von der Größe dieser Luftporen ab.

Wie bereits eingangs erwähnt und beispielsweise aus der zitierten DE 32 13 521 C2 bekannt, können derartige Füllstoffe aus Gasbetonmaterial bestehen, zu denen auch das erfindungsgemäße Trägermaterial 1 zuzuzählen ist, da dieses im Idealfall chemisch gesehen zu 100 % aus einem Calziumsilikathydrat - auch unter der Bezeichnung Calziumhydrosilikat bekannt - besteht. Derartige Füllstoffe haben bis jetzt aber nur einen mehr oder minder geringen Anteil an Mikroporen aufgewiesen und wurde zudem die Bedeutung dieser Mikroporen nicht erkannt. Vielmehr ist aus der zitierten DE-C2 bekannt, daß Füllstoffe aus Gasbetonmaterial für den Verwendungszweck Putz eine geschlossene Oberfläche, die beispielsweise durch Abrollen der Füllstoffgranulate hergestellt wird, aufweisen müssen. Außerdem wurde nicht erkannt, daß derartige Füllstoffgranulate auch als Trägermaterial für diverse Substanzen, beispielsweise Luft, sowie deren Eintrag damit in die hergestellten Putzsysteme verwendet werden kann.

Durch die gezielte Suche nach neuen Möglichkeiten zur Verbesserung der Qualität von Füllstoffen, insbesondere für Sanierputze, konnte vom Anmelder nunmehr überraschenderweise festgestellt werden, daß sich Gasbetonmaterialteilchen im besonderen Maße als Füllstoff bzw. Trägermaterial 1 für derartige Feststoffgemische eignen, wenn die Oberfläche der Teilchen 8 des Trägermaterials 1 nicht geschlossen sondern vielmehr offenporig ist und wenn zumindest 50 %, vorzugsweise 100 %, der im Herstellungsverfahren dieses Gasbetonmaterials gebildeten Poren 3 bzw. Kapillaren 4 im Mikromaßstab mit genannten Abmessungen ausgebildet sind.

Durch Untersuchungen an Sanierputzen konnte festgestellt werden, daß Wassertransport nur in Kapillaren 4 bzw. Poren 3 stattfinden kann, deren Durchmesser 5 kleiner 100 µm ist. Demnach kann also auch die Salzkristallisation nur in Poren 3 bzw. Kapillaren 4 dieser Größenordnung stattfinden.

Eine Bildung von Luftporen durch Tenside, wie es dem Stand der Technik entspricht, ist demnach bei Sanierputzen nicht ratsam, weil diese Tensidluftporen wesentlich größer als 100 µm sind und in der Folge dadurch auch kein Wassertransport und keine Salzablagerung bzw. nur in sehr beschränktem Umfang möglich ist.

Da wie zuvor beschrieben die Anzahl der Luftporen für die Lebensdauer eines Sanierputzes verantwortlich ist, ist also eine Herstellung von Sanierputzen mit Sanden wie bisher üblich und geeigneten Bindemitteln unter Beigabe von Leichtstoffen wie z.B. Perlit oder Bims nicht zielführend. Dies einerseits deswegen, weil alle Räume die der Sand einnimmt für den Sanierputz als Transport- und Lagerstätte für Salze völlig verloren gehen und andererseits auch deswegen, da aufgrund der Größe der Hohlräume des Bimses bzw. der Perlite kein Wassertransport und damit keine Salzablagerung stattfinden kann.

Mit dem erfindungsgemäßen Trägermaterial 1 eröffnen sich völlig neue Horizonte bei der Rezeptierung von Sanierputzen. Die Luftporen werden darin nicht mehr, wie weiter unten noch beschrieben wird, durch Tenside und den Mischvorgang hervorgerufen, sondern sind diese in Form besagter Poren 3 bzw. Kapillaren 4 bereits im Trägermaterial 1 vorhanden. Als vorteilhaft für Sanierputze erweist es sich auch, wenn diesen sowohl ein Anteil hydrophobierten Trägermaterials 1 als auch ein Anteil an nicht hydrophobierten Trägermaterial 1 zugesetzt wird, da, wenn der Sanierputz mit Wasser dem Stand der Technik entsprechend angemischt wird, z.B. in Freifallmischern in Zwangsmischern oder aber einer Putzmaschine, das Wasser in die nicht hydrophobierten Teilchen 8 des Trägermaterials 1 eindringen kann. Die Folge davon ist, daß die Luft, die in den Poren 3 bzw. Kapillaren 4 des Trägermaterials 1 enthalten ist, aus den Teilchen 8 herausgedrückt wird und im Feststoffgemisch 11, beispielsweise den angesprochenen Sanierputzen, also eine zumindest annähernd gleich große Anzahl an Luftporen im Bindemittelgemisch, d.h. in der Bindemittelmatrix, entsteht, wie dies in Fig. 2 andeutungsweise dargestellt ist, wobei diese Luftporen zusätzlich noch die Größe der Poren 3 bzw. Kapillaren 4 aufweisen können.

Ist nun das Trägermaterial 1 mit geeigneten flüssigen Luftporenbildnern z.B. Tensiden und Stabilisatoren zur Schaumbildung getränkt, so kann das Tensid während bzw. nach dem Anmischen mit Wasser in Lösung gehen, sodaß es möglich wird, daß die aus den Poren 3 bzw. Kapillaren 4 herausgedrückte Luft von Tensidmolekülen umgeben ist und somit ein Kollabieren mehrerer Luftblasen, d.h. das Entstehen weniger großer Luftblasen auf Kosten vieler kleiner, unterdrückt werden kann. Dieser Effekt entspricht in etwa der Schmutzlösung während eines Waschvorganges von Textilien, wobei auch hier wiederum hydrophile und hydrophobe Anteile des Tensids entsprechend wirken und es zur Bildung von Micellen kommen kann. Durch die zusätzliche Stabilisierung der herausgedrückten Luftblasen kann sich also im Bindemittelgemisch eine vorzugsweise gleichgroße Luftpore als zuvor im Füllstoff enthalten ausbilden.

Durch diesen Vorgang kann also gewährleistet werden, daß die Anzahl und die Größe der Luftporen durch den Füllstoff im Sanierputz oder in anderen Putzen oder Mörteln vorgegeben und bestimmt werden können.

Um die Verarbeitung besagter Sanierputze bzw. anderer Putze und Mörtel zu verbessern, ist es weiters möglich, dem Feststoffgemisch 11 geeignete aus dem Stand der Technik bekannte Verarbeitungshilfen beizumengen bzw. kann das Trägermaterial 1 zusätzlich als Träger für zumindest einen Teil dieser Verarbeitungshilfen herangezogen werden, sodaß in der Folge die Rezeptierung vor Ort, also z.B. auf der Baustelle, erleichtert werden kann. Es kann damit auch eine Verlängerung der Offenzeit erreicht werden.

Nach dem Abtrocknen des Feststoffgemisches 11, insbesondere des Sanierputzes, d.h. nach dem Verdampfen des Wassers, können also die zuvor labormäßig genau bestimmten Mengen und Größen der Luftporen und Kapillaren im Feststoffgemisch 11 vorliegen, wobei die Anzahl der Luftporen im Feststoffgemisch 11 im Vergleich zur Anzahl der Luftporen im Trägermaterial verdoppelt sein kann. Dies deswegen, da das Wasser, welches in das Trägermaterial 1 eingedrungen und die darin gespeicherte Luft verdrängt hat, wieder verdampft und somit diese Poren 3 und Kapillaren 4 wieder als Luftporen vorliegen, d.h. also daß zumindest annähernd 50 % der Luftporen im Trägermaterial 1 selbst und ca. annähernd 50 % im Bindemittelgemisch des Feststoffgemisches 11 vorliegen.

Im Falle der Verwendung des Trägermaterials 1 für Sanierputze kann es sich als vorteilhaft erweisen, daß wie bereits erwähnt, hydrophobierte Teilchen 8 des Trägermaterials 1 eingesetzt werden, da in diese "trockenen" Poren 3 bzw. Kapillaren 4 bereits beim Austrocknen des Sanierputzes also kurz nach dem Aufbringen Verdampfungszonen zur Verfügung stehen, in die Wasser eindampfen kann und damit Salzkristalle eingelagert werden können. Die Salzwanderung in den Sanierputz aufgrund des Transportes mit wäßrigen Medien kann damit also gestoppt werden, sodaß der Sanierputz vom Salz im Abbindezustand und beim Austrocknen nicht mehr durchwandert werden kann. Das aus dem Untergrund mit gelösten Salzen in den Sanierputz eindringende Wasser stellt also durch diese Hydrophobierung im Sanierputz an und wird in der Folge zum Verdampfen gezwungen.

Neben der zumindest teilweisen Hydrophobierung des Trägermaterials 1 kann aber auch das Bindermittelgemisch zumindest teilweise hydrophobiert sein, wodurch oben genannter Effekt weiter verstärkt werden kann.

Durch die Mischung von hydrophobierten und nicht hydrophobierten Anteilen im Feststoffgemisch 11, also beispielsweise hydrophobiertes Bindemittel und hydrophobiertes Trägermaterial 1 sowie nicht hydrophobiertes Trägermaterial 1, kann die Verdampfungszone im Sanierputz vergrößert werden. Das Wasser kann dadurch flächig im Sanierputz aufgehalten werden, kann aber andererseits in die nicht hydrophobierten Teilchen 8 des Trägermaterials 1 vordringen. Es entsteht dadurch, weil ja diese vorzugsweise kugeligen, nicht hydrophobierten Teilchen 8 die durch das hydrophobierte Bindemittelgemisch gebildete ebene Oberfläche kugelig durchbrechen können, eine größere Verdampfungsoberfläche. Die ehemals nicht hydrophobierten Teilchen 8 können sofort Wasser aufnehmen, das von rückwärts ansteht und kann das Wasser von der jetzt in das hydrophobierte Bindemittelgemisch hineinragenden gesamten Oberfläche dieser Teilchen 8 zusätzlich verdampfen.

Es kann also das gesamte Volumen des Putzes zumindest teilweise als Salzlagerstätte zur Verfügung gestellt werden, wobei ein Durchdringen des noch nassen Sanierputzes mit Salz durch die hydrophobierten Teilchen 8 des Trägermaterials 1 verhindert werden kann.

Das erfindungsgemäße Trägermaterial 1 kann aber auch eine weitere vorteilhafte Wirkung zeigen. Durch das poröse Trägermaterial 1 kann nämlich auch der Wärmedurchgangswiderstand eines Sanierputzes bzw. eines Putzes oder Mörtels verbessert werden, d.h. daß durch dessen Verwendung eine höhere Wärmedämmung erreicht werden kann. Diese höhere Wärmedämmung ist aber auch insbesondere im Fall von Sanierputzen notwendig, weil durch das Verdampfen des Wassers und den damit verbundenen Wärmeentzug von benachbarten Flächen im Sanierputz Kälte entstehen kann. Diese Kälte zieht also die Wärme von der Oberfläche weg und kann bei dem Stand der Technik entsprechenden Sanierputzen die Oberfläche so weit abkühlen, daß die Temperatur der Oberfläche unterhalb der Temperatur des Taupunktes abfällt. Die Folge davon kann sein, daß es zu einer Kondensation des zuvor aus dem Sanierputz ausgedampften Wassers kommt und damit zur Schließung der Oberfläche mit Wasser. Der Sanierputz ist durch diesen Vorgang in seiner Funktion behindert, bzw. kann sogar zerstört werden. All diese Nachteile können aufgrund der im erfindungsgemäßen Trägermaterial 1 vorhandenen Poren 3 bzw. Kapillaren 4 sowie durch die im Feststoffgemisch 11 durch das Herausdrücken der Luftbläschen aus genannten Poren 3 bzw. Kapillaren 4 im Feststoffgemisch 11 entstandenen Luftporen verhindert werden. Damit kann aber nicht nur die Lebensdauer derartiger Sanierputze in vorteilhafter Weise erhöht werden, sondern können mit dem erfindungsgemäßen Trägermaterial 1 ausgestattete Sanierputze auch zu einer Senkung der Heizkosten bzw. des Heizmittelbedarfs führen, was wiederum vorteilhafte Auswirkungen auf die Umwelt haben kann.

Zum Unterschied dazu sind die üblicherweise verwendeten Füllstoffe für Sanierputze, wie z.B. Sand, gute Wärmeleiter, d.h. daß die damit hergestellten Sanierputze einen geringen Wärmedurchgangswiderstand aufweisen. Damit kommt es aber nicht nur zu einer Abkühlung der Oberfläche des Sanierputzes, sondern kann bei Bewohnern damit verputzter Häuser durch den erhöhten Feuchtigkeitsanteil aufgrund der Kondensation ein Kältegefühl entstehen.

Durch die bessere Wärmedämmung mit Hilfe des erfindungsgemäßen Trägermaterials 1 hergestellter Sanierputze ist es auch möglich, die Raumtemperatur auf einem niederen Temperaturniveau zu halten - in Vergleich zu Temperaturen in Räumen von Häusern die nicht mit Sanierputzen ausgestattet sind, die das erfindungsgemäße Trägermaterial enthalten - wodurch, wie bekannt und nachgewiesen ist, eine höhere Wohnbehaglichkeit erreicht werden kann.

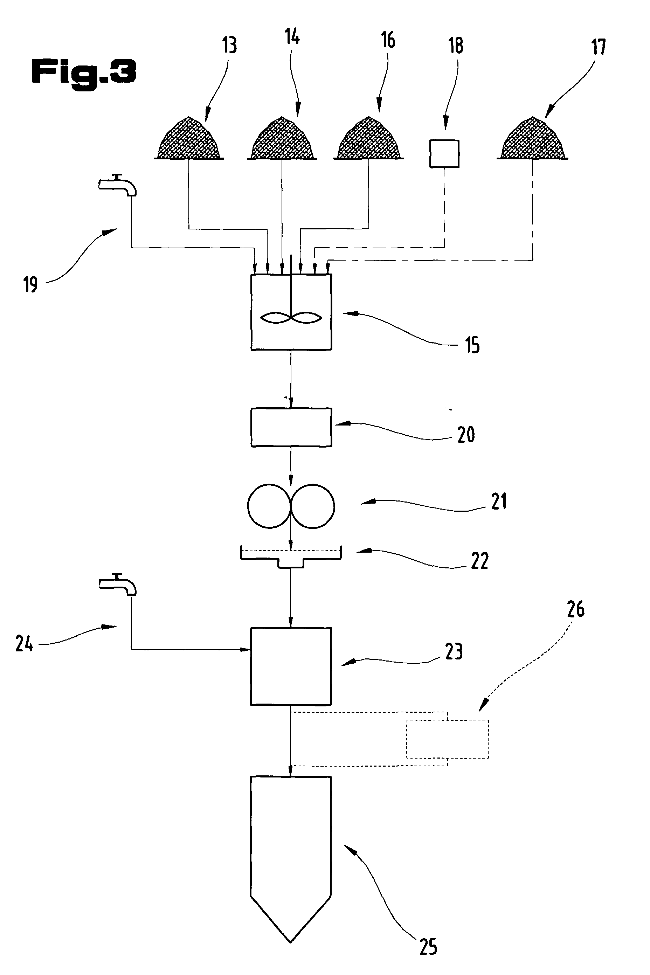

In Fig. 3 ist schaubildlich und vereinfacht ein schematischer Produktionsprozeß für das erfindungsgemäße Trägermaterial 1 dargestellt.

Die Edukte für das Trägermaterial 1, also beispielsweise zumindest ein Kieselsäure bzw. deren Anhydrit enthaltendes Material 13, zumindest ein kalk- bzw. kalziumoxidhältiges Material bzw. Bindemittel 14, insbesondere ein hydraulisches, z.B. Kalk, verschiedene Zemente, wie z.B. Portlandzement, Traßzement, Hochofenzement oder dgl., können in einem Mischer 15, z.B. einem Trommelmischer, einem Trogmischer, einem Schneckenmischer, einem Muldenmischer, oder aber in einem Mischsilo oder dgl., mit zumindest einem gas- und/oder schaumbildenden Material 16 vermischt werden. Zusätzlich können weitere Feststoffe und/oder Flüssigphasen 17, 18, wie beispielsweise Hydrophobierungsmittel, Tenside wie z.B. Metallseifen, Stabilisatoren, Verarbeitungshilfen oder dgl., dem Mischer 15 zugeführt werden, wie dies durch die strichpunktierte bzw. strichlierte Linie in Fig. 3 angedeutet ist.

Vorzugsweise werden die Edukte pulverförmig eingesetzt. Als gas- und/oder schaumbildendes Material 16 kann vorzugsweise Aluminiumpulver verwendet werden, dessen mittlerer Teilchendurchmesser auf den erwünschten mittleren Durchmesser der zu erzeugenden Mikroporen 6 abgestellt ist, sodaß damit die gezielte Erzeugung von Poren 3 bzw. Kapillaren 4 mit dem gewünschten mittleren Durchmesser von maximal 100 µm möglich ist.

Die erzeugte Mischung wird mit einer Flüssigkeit 19, z.B. Wasser, angeteigt und kann diese Mischung in der Folge aus dem Mischer 15 in eine entsprechende Form 20 überführt werden. Die Größe bzw. die Ausgestaltung der Form 20 kann beliebig gewählt werden, da das Trägermaterial 1 vorzugsweise als Teilchen 8 verwendet wird.

Selbstverständlich kann das Reaktionsgemisch aber auch ohne entsprechende Form 20 zur Reaktion gebracht werden.

Durch die Alkalität der Flüssigkeit 19 aufgrund des kalkhältigen Bindemittels 14 kommt es in der Folge in diesem wäßrigen, alkalischen Milieu zu einer Reaktion des Aluminiumpulvers, wobei bei dieser Reaktion wie bekannt Wasserstoff entsteht. Es wird damit möglich, das Gemisch aus den Edukten in der Form 20 aufzutreiben, und entsteht durch die Wasserstoffbläschen, welche zumindest annähernd die Größe der Aluminiumpartikel aufweisen, die gewünschte poröse Struktur im Trägermaterial 1.

Die durch die Reaktion des kalkhältigen Bindemittels 14 mit der Flüssigkeit 19 hervorgerufene Alkalität - der pH-Wert liegt in der Nähe von 14 - führt bei Verwendung von Oleaten bzw. Steraten als Hydrophobierungsmittel auch dazu, daß diese verseifen, sodaß über einen mehr oder minder langen Zeitraum das gesamte mit dem durch dieses Verfahren erzeugte Trägermaterial 1 hergestellte Feststoffgemisch 11 hydrophobiert wird.

Dieses Reaktionsprodukt kann in der Folge aus der Form 20 genommen werden und einem Brecher 21, z.B. einem Backenbrecher, einem Kniehebelbrecher, einem Walzenbrecher, einem Kegelbrecher, einem Prallbrecher oder dgl., zugeführt werden, bzw. ist es möglich, entsprechende Schneidemaschinen zu verwenden, sodaß das zuvor aufgeblähte und getrocknete Reaktionsgemisch auf die gewünschte Teilchengröße mit einem mittleren Durchmesser im Bereich zwischen 0,1 mm und 10 mm zerkleinert wird. Anschließend ist es möglich, über Sortiereinrichtungen 22, z.B. Siebe, Sichter, Zyklone oder dgl., gewünschte Sieblinien zur Verfügung zu stellen.

Sollte die Grobzerkleinerung des Reaktionsgemisches nicht ausreichend sein, ist es selbstverständlich möglich, eine Feinzerkleinerung mit z.B. Mühlen, wie Trommelmühlen, Schwingmühlen, Wälzmühlen, Walzenmühlen, Prallmühlen bzw. mit Feinschneidmaschinen oder dgl., vorzunehmen.

Das so erhaltene teilchenförmige Trägermaterial 1 kann in weiterer Folge in einem Autoklaven 23 hydrothermal mit z.B. Sattdampf 24 bei ca. 190 °C und ca. 12 bar in ca. 6 bis 12 Stunden gehärtet werden, sodaß die Teilchen 8 des Trägermaterials 1 eine gute Form- und Raumbeständigkeit aufweisen.

Dieses Trägermaterial 1 kann abschließend in geeigneten Lagerbehältern 25 z.B. Silos zur weiteren Be- bzw. Verarbeitung zwischen- oder endgelagert werden.

Selbstverständlich ist es aber auch möglich, daß das Trägermaterial 1 vor der Lagerung in zumindest einem Zwischenschritt mit diversen weiteren Feststoffen bzw. Flüssigphasen 18 in dazu geeigneten Behältern 26 beladen bzw. beschichtet wird, wie dies in Fig. 3 strichliert angedeutet ist. Diese zusätzlichen Feststoffe 17 bzw. Flüssigphasen können z.B. genannte Hydrophobierungsmittel, Tenside, Stabilisatoren für die Luftbläschen, aber auch staubförmige Komponenten, beispielsweise sprühgetrocknete Luftporenbildner, Fließharze oder dgl., sein. Die Beladung des Trägermaterials 1 kann z.B. durch Tränken, durch Besprühen, durch Mischen oder dgl. erfolgen.

Insbesondere der Umstand, daß das Trägermaterial 1 mit weiteren Feststoffen und/oder Flüssigphasen beladen werden kann, erbringt den Vorteil, daß es nunmehr möglich ist, staubende Zusatzstoffe für Mörtel, Beton, Putze oder dgl. dem jeweiligen Endverbraucher auf einfache Art und Weise zur Verfügung zu stellen, sodaß die Verarbeitung bzw. die Herstellung von z.B. Putzen und somit die Handhabung bzw. die Rezeptur erleichtert bzw. verbessert werden kann. Es ist damit aber auch möglich, individuelle Wirkstoffzusammensetzungen für genannte Feststoffgemische 11 dem jeweiligen Endverbraucher zur Verfügung zu stellen, sodaß die Verarbeitung bzw. die Herstellung der Feststoffgemische 11 vor Ort vereinfacht werden kann.

Von Vorteil erweist es sich dabei auch, daß die benötigten Mengen an Verarbeitungshilfen, beispielsweise Wirkkomponenten zur Verlängerung der Offenzeit, verringert werden können, da im Gegensatz zu herkömmlichen Feststoffgemischen 11, insbesondere Sanierputzen, Putzen oder dgl., nicht sämtliche Luftporen im Bindemittelgemisch vorhanden sind, sodaß in der Folge die Standzeit verringert sein kann, sondern daß während der Trockenphase eines derartigen Feststoffgemisches 11 der Anteil der Luftporen im Bindemittelgemisch allmählich erhöht wird, bis er ca. einen Anteil an 50 % der im Feststoffgemisch 11 vorhandenen gesamten Luftporen erreicht.

Von Vorteil ist es weiters, daß dem Eduktgemisch bzw. das gebrochene und in Sieblinien gesplittete Reaktionsprodukt, nämlich das Trägermaterial 1, durch die Beigabe von Branntkalk getrocknet werden kann. Durch diese chemische Trocknung ist es nicht nur möglich, auf eine thermische Trocknung in entsprechenden Vorrichtungen gänzlich zu verzichten, sondern es können damit auch Tenside bzw. Schaumstabilisatoren oder dgl., die nicht wärmestabil sind, mitverarbeitet werden, ohne daß zusätzliche Prozeßschritte erforderlich wären.

Die Trocknung mit Branntkalk kann beispielsweise in eigenen dafür vorgesehenen Behältern (in Fig. 3 nicht dargestellt) erfolgen. Die durch die Reaktion des Branntkalkes mit der Feuchtigkeit entstehende Temperatur, z.B. 75 °C , kann den Trocknungsvorgang unterstützen.

Selbstverständlich ist es aber auch möglich, die Trocknung des Trägermaterials 1 thermisch bzw. in Kombination mit der chemischen Trocknung durchzuführen. Ebenso ist aber auch eine Lufttrocknung möglich, bzw. kann die Trocknung mehrstufig durchgeführt werden.

Die Zugabe von Branntkalk als Trocknungsmittel kann aber auch bewirken, daß das erfindungsgemäße Trägermaterial 1 über einen längeren Zeitraum problemlos gelagert werden kann, da eventuell aufgenommene Luftfeuchtigkeit abreagieren kann. Es kann damit aber auch erreicht werden, daß eventuell zugesetzte Hydrophobierungsmittel, beispielsweise erwähnte Oleate oder Sterate, erst zum Zeitpunkt der Herstellung des Feststoffgemisches 11 hydrophobiert werden, sodaß die Hydrophobierung genau zum richtigen Zeitpunkt entstehen kann.

Es ist aber auch möglich, das Trägermaterial 1 in speziellen Mischern mit den erforderlichen bzw. gewünschten Chemikalien, insbesondere der genannten, z.B. den Hydrophobierungsmitteln, zu versehen. So kann z.B. das Trägermaterial so in Bewegung versetzt werden, daß eine Besprühung mit den Flüssigchemikalien von oben möglich ist, ohne daß die verwendeten Mischwerkzeuge mit dem Trägermaterial verkleben, da das Besprühen mit entsprechenden Sprühdüsen von oben den Vorteil bietet, daß die Flüssigchemikalien zumindest annähernd zur Gänze vom Trägermaterial aufgenommen werden. An das Besprühen kann sich in der Folge der Trocknungsprozeß anschließen.

Das Trägermaterial 1 kann aber auch als Puffer zur Regulierung des Feuchtigkeitshaushaltes eines herzustellenden Feststoffgemisches 11, bspw. während des Abbindevorganges, herangezogen werden, bzw. ist es damit möglich, vorhandene Trockenmischungen in einem Vorstadium für die Herstellung des Feststoffgemisches 11 über einen längeren Zeitraum trocken zu halten, d.h. daß bestimmte Rohstoffanteile mit der aufgenommenen Feuchtigkeit nicht reagieren.

Der Ordnung halber sei abschließend darauf hingewiesen, daß zum besseren Verständnis des Aufbaus des Trägermaterials 1 dieses bzw. dessen Bestandteile teilweise unmaßstäblich und/oder vergrößert und/oder verkleinert dargestellt wurden.

Die den eigenständigen erfinderischen Lösungen zugrundeliegende Aufgabe kann der Beschreibung entnommen werden.

Vor allem können die einzelnen in den Fig. 1; 2; 3 gezeigten Ausführungen den Gegenstand von eigenständigen, erfindungsgemäßen Lösungen bilden. Die diesbezüglichen, erfindungsgemäßen Aufgaben und Lösungen sind den Detailbeschreibungen dieser Figuren zu entnehmen.

### Bezugszeichenaufstellung

- 1: Trägermaterial
- 2: Substanz
- 3: Pore
- 4: Kapillare
- 5: Durchmesser
- 6: Mikropore
- 7: Makropore
- 8: Teilchen
- 9: Teilchendurchmesser
- 10: Trägermaterialoberfläche
- 11: Feststoffgemisch
- 12: Bindemittel
- 13: Material
- 14: Bindemittel
- 15: Mischer
- 16: Material
- 17: Feststoff
- 18: Flüssigphase
- 19: flüssigkeit
- 20: Form
- 21: Brecher
- 22: Sortiereinrichtung
- 23: Autoklav
- 24: Sattdampf
- 25: Lagerbehälter
- 26: Behälter

## Patentansprüche

1. Poröses, insbesondere offenporiges, vorzugsweise teilchenförmiges und/oder inertes, Trägermaterial auf Silikatbasis für feste und/oder flüssige und/oder gasförmige Substanzen, zumindest bestehend aus zumindest einem Kieselsäure bzw. deren Anhydrit enthaltenden Material, z.B. Quarz, quarzhältige Sande, Schiefer oder dgl., und zumindest einem kalk- bzw. calciumoxidhältigen Material bzw. Bindemittel, insbesondere einem hydraulischem, z.B. Kalk, Zemente wie z.B. Portlandzement, Traßzement, Hochofenzement, oder dgl., und/oder zumindest einem Reaktionsprodukt aus den vorgenannten Materialien, z.B. ein Calziumsilikathydrat oder dgl., wobei die Trägermaterialoberfläche bezogen auf ein definiertes Trägermaterialvolumen durch die Ausbildung von Poren und/oder Kapillaren im Mikro- und/oder Makromaßstab vergrößert ist, dadurch gekennzeichnet, daß zumindest 50 % der Poren (3) und/oder Kapillaren (4) Mikroporen (6) sind und einen mittleren Durchmesser von maximal 100 mm, vorzugsweise maximal 30 mm, aufweisen.

2. Trägermaterial nach Anspruch 1, dadurch gekennzeichnet, daß zwischen 80 % und 100 % der Poren (3) und/oder Kapillaren (4) im Mikromaßstab ausgebildet sind.

3. Trägermaterial nach Anspruch 1 und/oder 2, dadurch gekennzeichnet, daß die Teilchen (8) zumindest annähernd kugelförmig, linsenförmig, unregelmäßig oder dgl. ausgebildet sind.

4. Trägermaterial nach einem oder mehreren der vorhergehenden Ansprüche, dadurch gekennzeichnet, daß die Teilchen (8) einen maximalen durchschnittlichen Teilchendurchmesser (9) in beliebiger Richtung aufweisen, der im Bereich zwischen 0,1 mm und 10,0 mm, vorzugsweise zwischen 0,1 mm und 1,2 mm, liegt.

5. Trägermaterial nach einem oder mehreren der vorhergehenden Ansprüche, dadurch gekennzeichnet, daß zumindest ein Teil der Trägermaterialoberfläche (10) hydrophobiert ist.

6. Trägermaterial nach einem oder mehreren der vorhergehenden Ansprüche, dadurch gekennzeichnet, daß für die Hydrophobierung der Trägermaterialoberfläche (10) eine Verbindung der Oleinsäure, z.B. ein Oleat, eine Verbindung der Stearinsäure, z.B. ein Stearat, ein Silikonpolymeres, Silikonate, Mischungen daraus, oder dgl. aufgebracht ist.

7. Trägermaterial nach einem oder mehreren der vorhergehenden Ansprüche, dadurch gekennzeichnet, daß zumindest ein Teil der Trägermaterialoberfläche (10) mit zumindest einer Wirkkomponente, z.B. einem Tensid, einem Stabilisator für Schäume, oder dgl. beschichtet ist.

8. Mit zumindest einem hydraulischen Bindemittel, z.B. einem Zement oder dgl., gebundenes Feststoffgemisch, beispielsweise Putz, Mörtel, Beton oder dgl., das zumindest einen Füllstoff enthält, dadurch gekennzeichnet, daß der Füllstoff als Trägermaterial (1) nach einem der Ansprüche 1 bis 7 ausgebildet ist.

9. Feststoffgemisch nach Anspruch 8, dadurch gekennzeichnet, daß der Füllstoff ein Trägermaterialgemisch aus hydrophobierten und nichthydrophobierten Trägermaterial (1) ist.

10. Feststoffgemisch nach Anspruch 8 und/oder 9, dadurch gekennzeichnet, daß der Anteil des hydrophobierten Trägermaterials (1) am Trägermaterialgemisch im Bereich zwischen 40 Gew.-% und 80 Gew.-%, vorzugsweise zwischen 50 Gew.-% und 70 Gew.-%, bezogen auf 100 Gew.-% Trägermaterialgemisch, liegt.

11. Feststoffgemisch nach einem oder mehreren der vorhergehenden Ansprüche, dadurch gekennzeichnet, daß zumindest ein Teil des Füllstoffes mit zumindest einem weiteren Feststoff (17) und/oder einer Flüssigphase (18) beladen ist, z.B. einem Fließharz, einem Luftporenbildner, beispielsweise einem Tensid, einem Stabilisator, oder dgl.

12. Feststoffgemisch nach einem oder mehreren der vorhergehenden Ansprüche, dadurch gekennzeichnet, daß Verarbeitungshilfen, z.B. zur Erzielung einer entsprechenden Offenzeit, enthalten sind.

13. Verfahren zum Herstellen eines Trägermaterials nach einem der Ansprüche 1 bis 7, bei dem ein Ausgangsgemisch aus zumindest einem hydraulischen und/oder kalkhältigen Bindemittel, z.B. Zement, Kalk, Branntkalk oder dgl., zumindest einem kieselsäurehältigen Material, z.B. Quarz, quarzhältiger Sand, Schiefer oder dgl., zumindest einem gas- und/oder schaumbildenden Material zur Erzeugung einer porösen Trägermaterialstruktur und Wasser hergestellt, in eine Form gegossen und vorzugsweise nach der Reaktion der Edukte hydrothermal und/oder unter Druck gehärtet wird, dadurch gekennzeichnet, daß die mittlere Teilchengröße des gas- und/oder schaumbildenden Materials so gewählt wird, daß zumindest 50 % der entstehenden Poren, vorzugsweise zwischen 80 % und 100 %, einen mittleren Durchmesser von maximal 100 mm, vorzugsweise maximal 30 mm aufweisen.

14. Verfahren nach Anspruch 13, dadurch gekennzeichnet, daß als gas- und/oder schaumbildendes Material Aluminiumpulver verwendet wird, welches vorzugsweise einen mittleren Teilchendurchmesser von zumindest annähernd 30 mm aufweist.

15. Verfahren nach Anspruch 13 und/oder 14, dadurch gekennzeichnet, daß ein Reaktionsprodukt aus dem Ausgangsgemisch nach dem Blähvorgang und dem zumindest teilweisen Trocknen, vorzugsweise nach dem Austrocknen, insbesondere vor der Härtung, gebrochen und/oder gesiebt wird.

16. Verfahren nach einem oder mehreren der Ansprüche 13 bis 15, dadurch gekennzeichnet, daß das Reaktionsgemisch thermisch und/oder chemisch, z.B. mit Branntkalk getrocknet wird, vorzugsweise nach dem Abbinden.

17. Verfahren nach einem oder mehreren der Ansprüche 13 bis 16, dadurch gekennzeichnet, daß Sieblinien mit einem Teilchendurchmesser des Trägermaterials im Bereich zwischen 0,1 mm und 10 mm, vorzugsweise 0,1 mm und 1,2 mm, hergestellt werden.

18. Verfahren nach einem oder mehreren der Ansprüche 13 bis 17, dadurch gekennzeichnet, daß dem Ausgangsgemisch zumindest ein hydrophobierendes Mittel, z.B. eine Verbindung der Oleinsäure, z.B. ein Oleat, eine Verbindung der Stearinsäure, z.B. ein Stearat, ein Silikonpolymeres, Mischungen daraus, oder dgl., zugesetzt wird.

19. Verfahren nach einem der Ansprüche 13 bis 18, dadurch gekennzeichnet, daß das vorzugsweise gesiebte Reaktionsprodukt mit zumindest einem weiteren Feststoff und/oder zumindest einer Flüssigphase, z.B. einem Fließharz, einem Luftporenbildner, beispielsweise einem Tensid, einem Stabilisator oder dgl. beladen wird, beispielsweise durch Vermischen der genannten Materialien, durch Aufsprühen und/oder Tränken (mit) der Flüssigphase, oder dgl.
